# EUROPEAN PATENT APPLICATION

(11) **EP 2 040 152 A1**
(43) Date of publication of application: **25.03.2009**
(21) Application number: 07767610.4
(22) Date of filing: 26.06.2007
(51) Int. Cl.: G06F 3/048, G09G 5/00, G09G 5/14, G09G 5/36

(54) **METHOD AND PROGRAM FOR MODIFYING DISPLAY OBJECT SHAPE AND DATA PROCESSING SYSTEM**

(30) Priority: 27.06.2006 JP 2006176471
(71) Applicant: International Business Machines Corporation, Armonk, NY 10504 (US)
(72) Inventor: HATTORI, Yohichi, Kanagawa 242-8502 (JP)
(74) Representative: Sekar, Anita
(86) International application number: PCT/JP2007/062804
(87) International publication number: WO 2008/001771

(57) **Abstract**

Object To provide a method, a program, a data processing system for efficiently operating the shape of a display object that contains a content display area.

Solving Means A method for modifying a shape of a display object containing a content display area on a display device is provided. The method includes a step of displaying on the display device the display object containing the content display area, a step of prompting a user to input a figure to the content display area on the display device, a step of generating a figure having a shape that the content display area can take on the basis of a shape of the figure input by the user, and a step of modifying the shape of the display object on the basis of a shape of the generated figure.

## Description

### Technical Field

The present invention generally relates to a graphical user interface, and more specifically, it relates to, in a data processing system connected to a display device, a method, program, and data processing system for operating display of a display object on the display device.

### Background Art

Multi-window operating systems, which display concurrently executed multiple programs as multiple windows, are widely used for business applications and personal applications. Typical multi-window operating systems include Windows® operating system of Microsoft Corporation, Mac OS® of Apple Computer Inc., and X Window System in UNIX®.

For a data processing system having a multi-window operating system, user productivity largely depends on efficiency of operation of a window object on a display device (hereinafter referred to simply as "window"). For example, efficient resizing of a window can greatly increase the user productivity. Therefore, companies in the computer industry develop techniques for improving window operation, some examples of which are described below.

Japanese Unexamined Patent Application Publication No. 7-93123 discloses a graphical user interface for resizing a window object. The graphical user interface includes means for associating a border of a window with a cursor, means for resizing the window by moving the cursor on a display, and means for displaying a resized image in which a portion of a window that is not affected by resizing after the resizing contains a portion the same as an image contained prior to the resizing.
Japanese Unexamined Patent Application Publication No. 9-330198 discloses a method for controlling a window. The method includes a step of sequentially acquiring a moving position of a pointer and storing it in a table, a step of determining whether a portion of a moving path of the pointer calculated by linking information on the moving position of the pointer stored in the table intersects a frame line of a window to be controlled and, when the portion intersects the frame line, checking (a) the quantity of intersected frame lines and (b) an element defined by the quantity of coordinates of endpoints of the intersected frame line, determining whether the moving path of the pointer represents an instruction to resize of a window frame or an instruction to move the window frame, and determining the window frame or vertex to be operated, and a step of, in response to the determined instruction, moving the window frame or vertex determined to be operated in accordance with the amount of movement of the pointer and moving or resizing the window frame or vertex.
Japanese Unexamined Patent Application Publication No. 2005-71387 discloses a method that changes the size of a parent window to a size that allows a child window to be displayed if the size of the parent window after resizing is smaller than the child window, thereby displaying the entire child window even when the parent window is resized.
Another example in the background art is Adobe Photoshop®, which is a program product of Adobe Systems Incorporated. Adobe Photoshop® has a zooming capability of causing a user to select an upper left position and a lower right position of a region that the user wishes to enlarge in an image displayed within an application window of Adobe Photoshop® on a display device thereby enlarging a rectangular area that has the both selected points as its vertices.
[Patent Document 1] Japanese Unexamined Patent Application Publication No. 7-93123
[Patent Document 2] Japanese Unexamined Patent Application Publication No. 2005-92447
[Patent Document 3] Japanese Unexamined Patent Application Publication No. 2005-71387
[Non-Patent Document 1] "[Kihon Sousa] Sentakusita bubun wo chusin ni gazo wo kakudai hyouji suru niha (zoom tool)", [online], December 16, 2004, Adobe Systems Incorporated [searched in June 26, 2006], the Internet <http://support.adobe.co.jp/faq/faq/qadoc.sv?225380+002>

### Disclosure of the Invention

### Problems to be Solved by the Invention

A user in a multi-window operating system may wish to resize (enlarge or reduce) a window such that only a portion of a content displayed in the window is displayed in a content display area to view as many windows as possible. One approach to satisfy this desire according to existing techniques is to click and drag a side or a corner of a window, resize the window, and then operate a scroll bar such that a portion of the content that the user wishes to display is correctly displayed.

However, this approach imposes on a user a slightly cumbersome operation of moving a cursor to a side or a corner of a window, clicking and dragging it, and then operating a scroll bar. In other words, a difficult operation may be required to change the size of a window to a size necessary for displaying only a desired specific portion of a content in some cases. This has adverse effects on the user productivity. The problem cannot be solved by each of the techniques in the background art described in Patent Documents 1 to 3 and Non-Patent Document 1 listed above and a combination thereof.

Accordingly, an object of the present invention is to provide a method, a program, and a data processing system for efficiently operating the shape of a display object (e.g., a window object) containing a content display area.

### Means for Solving the Problems

To achieve the object, a method for modifying a shape of a display object containing a content display area on a display device in a data processing system having the display device is provided. The method includes a step of displaying on the display device the display object containing the content display area, a step of prompting a user to input a figure to the content display area on the display device, a step of generating a figure having a shape that the content display area can take on the basis of a shape of the figure input by the user, and a step of modifying the shape of the display object on the basis of a shape of the generated figure.

Preferably, the input figure may be a handwritten figure input by the user via an input device. The display object can be a window object. The generated figure can be a rectangle. Preferably, the step of generating the figure having the shape that the content display area can take may include a step of detecting that a closed curve is formed in the figure input by the user and a step of generating the figure having the shape that the content display area can take in response to detection of the formation of the closed curve.

Preferably, the step of generating the figure having the shape that the content display area can take may include a step of displaying a temporary figure generated on the basis of the shape of the figure input by the user and prompting the user to perform a modification operation of modifying a shape of the temporary figure, a step of modifying the shape of the temporary figure in response to the modification operation performed by the user, and a step of confirming the modified temporary figure as a final shape of the generated figure in response to input of a final confirmation action from the user. Preferably, the step of modifying the shape of the display object on the basis of a shape of the generated figure may include a step of modifying the shape of the display object such that the display object contains the content display area having the shape of the generated figure.

The summary of the invention is described above as a method for modifying a shape of a display object. The present invention can be a data processing system, a program, and a program product. Examples of the program product include a recording medium that stores the program and a medium that transmits the program.

Not all features necessary for the present invention are listed in the summary of the invention described above. It is to be noted that any combination or subcombination of the features can be the present invention.

### Best Mode for Carrying Out the Invention

The best mode for carrying out the invention will now be described with reference to the drawings. The embodiment described below is not intended to limit the scope of the invention. Not all combinations of features described in the embodiment are required for the means for solving the problems.

The invention can be implemented in many different modes and should not be interpreted as limiting to the content of the description of the embodiment. It is to be noted that not all combinations of features described in the embodiment are required for the means for solving the problems. The same reference numerals are used for similar elements throughout the description of the embodiment.

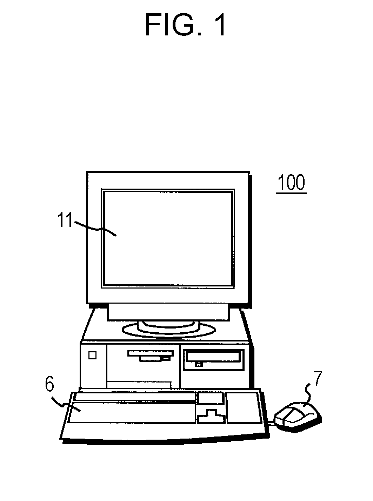

Fig. 1 illustrates an example of an external view of a data processing system 100 according to an embodiment of the invention. The data processing system 100 according to the embodiment of the invention includes a keyboard 6, a mouse 7, and a display device 11.

The display device 11 in the data processing system 100 according to the embodiment of the invention visually provides information, such as one about a working status, for a user. The user operates a plurality of windows displayed on the display device 11 by the multi-window operating system via an input device, such as the keyboard 6 and the mouse 7, so that the user can use a desired application of one or more computer software applications. The user performs an operation of the displayed windows (e.g., window resizing) to efficiently use the application.

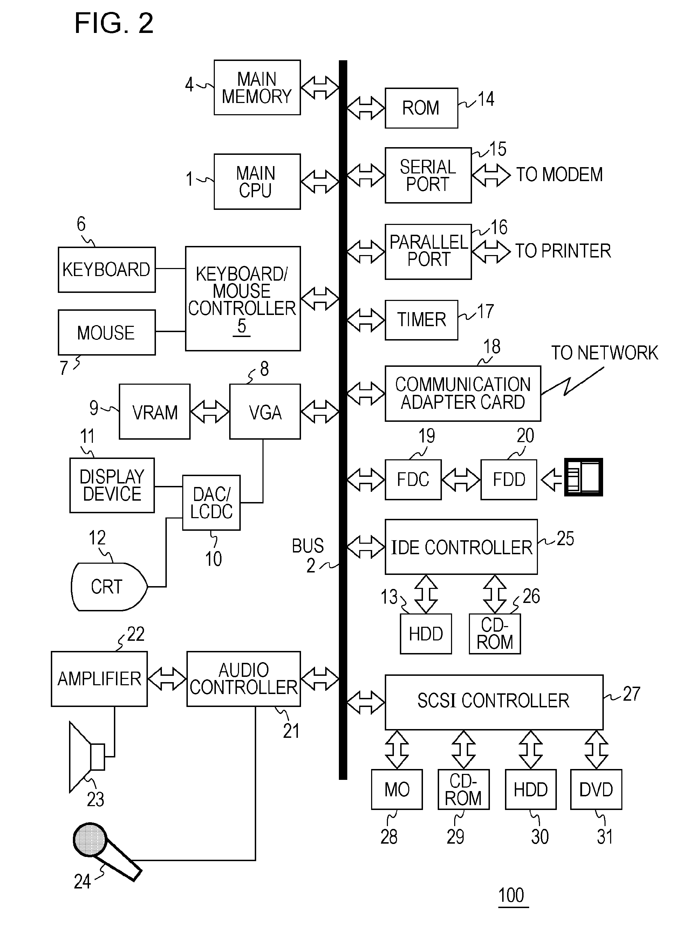

Fig. 2 illustrates an example of a hardware configuration in an information processing apparatus suited for implementing the data processing system 100 according to the embodiment of the invention. The information processing apparatus includes a central processing unit (CPU) 1 and a main memory 4, both being connected to a bus 2. Hard disk drives 13 and 30 and removable storages (external storage systems whose recording media are replaceable), such as CD-ROM drives 26 and 29, a flexible disk drive 20, an MO drive 28, and a DVD drive 31, are connected to the bus 2 via an FD controller 19, an IDE controller 25, a SCSI controller 27, and the like.

A recording medium, such as an FD, an MO, a CD-ROM, and a DVD-ROM, is inserted into a removable storage. The recording medium, the hard disk drives 13 and 30, and a ROM 14 can store code of a computer program for providing instructions to a CPU and the like in cooperation with an operating system to carry out the invention. The computer program is executed by being loaded into the main memory 4. The computer program can be compressed. The computer program can also be divided and recorded in a plurality of media.

The information processing apparatus receives input from an input device, such as the keyboard 6 and the mouse 7, via a keyboard/mouse controller 5. The information processing apparatus is connected to the display device 11 for providing visual data to a user via a DAC/LCDC 10.

The information processing apparatus is connected to a network via a network adapter 18 (e.g., Ethernet® card or a token-ring card) or the like and can communicate with other computers or the like. Although not shown in the figure, the information processing apparatus can be connected to a printer via a parallel port or to a modem via a serial port.

From the foregoing description, it will be readily understood that an information processing apparatus suited for implementing the data processing system 100 according to the embodiment of the invention is implemented by a common information processing apparatus, such as a personal computer, a workstation, and a mainframe, or a combination thereof. The components described above are illustrative only, and not all the components are necessarily required for the invention.

It will, of course, be understood that those skilled in the art can readily reach various modifications, such as distribution of the functions of hardware components of the information processing apparatus used in the embodiment of the invention into a combination of machines. These modifications are concepts contained in the scope of the invention.

The data processing system 100 adopts an operating system that supports a graphical user interface (GUI) multi-window environment, such as Windows® operating system from Microsoft Corporation, Mac OS® from Apple Computer Inc., and UNIX® system having X Window System (e.g., AIX® from International Business Machines Corporation).

From the foregoing, it can be understood that the data processing system 100 used in the embodiment of the invention is not limited to a specific multi-window operating system environment.

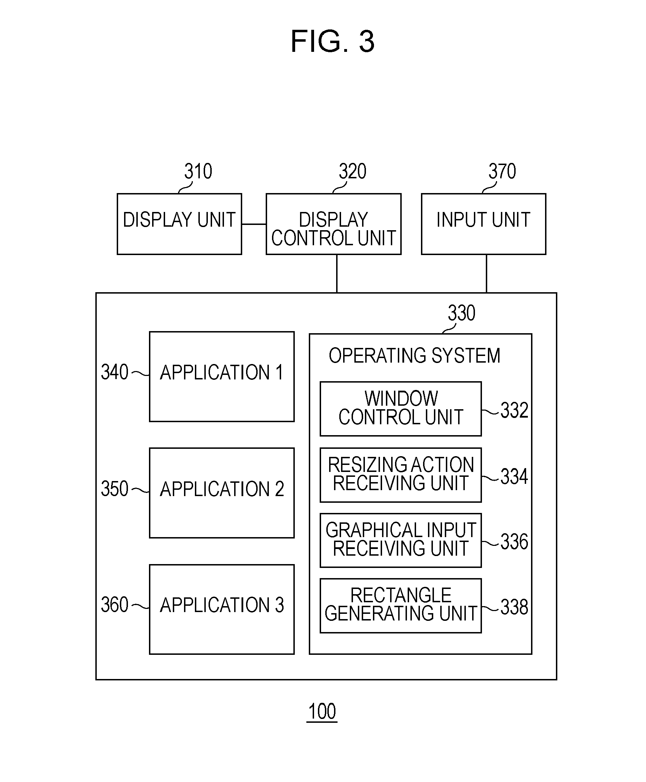

Fig. 3 is a functional block diagram of the data processing system 100 according to the embodiment of the invention. The components shown in the functional block diagram of Fig. 3 can be implemented by, in an information processing apparatus that has a hardware configuration illustrated in Fig. 3, loading the operating system and computer program stored in the hard disk drives 13 into the main memory 4, then causing the CPU 1 to read the operating system and computer program, and causing the hardware resources and software to cooperate together.

The data processing system 100 includes a display unit 310, a display control unit 320, an operating system 330, applications 340, 350, and 360, and an input unit 370. The display unit 310 displays a desktop screen and the like in the multi-window operating system in response to an instruction from the display control unit 320. The display control unit 320 issues an instruction to display a screen to be displayed on the display unit 310 and controls an operation of the display unit 310. The input unit 370 is implemented by the keyboard 6, the mouse 7, and the like. The input unit 370 receives input (including a handwritten figure) from a user who operates the data processing system 100.

The operating system 330 provides a resource management function, which enables application software and the like to utilize resources of the data processing system 100. For example, the operating system 330 provides a hardware resource management function, a file handle function, a spool function, a job management function, a storage protection function, a virtual memory management function, and other functions (not shown). These functions are well known to those skilled in the art, so the detained description is omitted.

The operating system 330 includes a window control unit 332, a resizing action receiving unit 334, a graphical input receiving unit 336, and a rectangle generating unit 338.
The window control unit 332 controls a running application of the applications 340, 350, and 360 as a window, provides a user with information by displaying the window on the display unit 310, and receives input from the user.

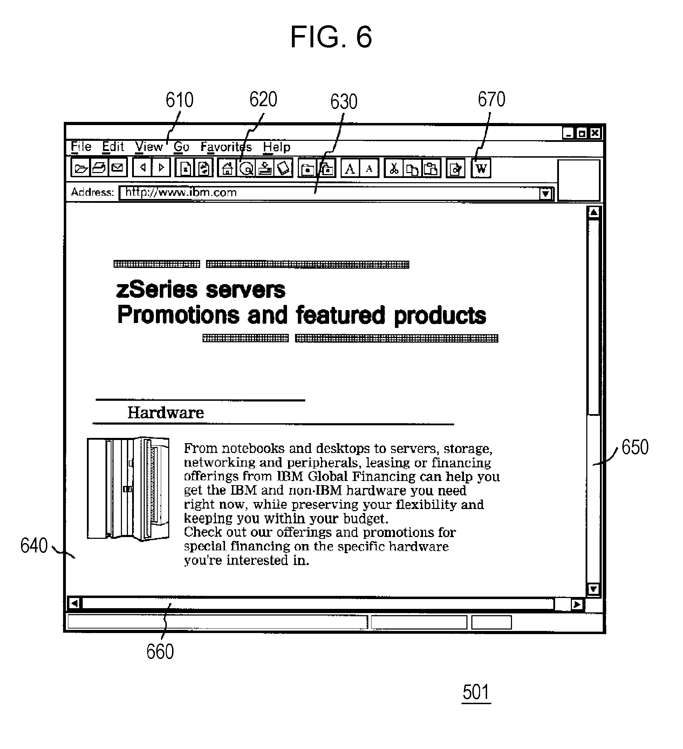

The resizing action receiving unit 334 has a function that shifts the system to a window resizing mode when a user who wishes to resize a window according to the embodiment of the invention inputs a predetermined action. In this case, the predetermined action can be input of a predetermined shortcut key (e.g., SHIFT-R key combination) or can be selection of a button 670 (see Fig. 6), which is a selectable object in a window targeted for resizing.

The graphical input receiving unit 336 has a function of identifying user's graphical input, more specifically, input of a handwritten figure, performed when the data processing system 100 is in the window resizing mode and of sending necessary information to the rectangle generating unit 338. The rectangle generating unit 338 generates a rectangle required to resize a window size on the basis of the information necessary to generate the rectangle received from the graphical input receiving unit 336.

Examples of the applications 340, 350, and 360 include a web browser, word processing software, spreadsheet software, presentation software, and other various applications. In the embodiment of the invention, a web browser of these is used as an example, but it is to be noted that the invention is not limited to these. In addition, three applications included in the data processing system 100 according to the embodiment of the invention can be increased or reduced.

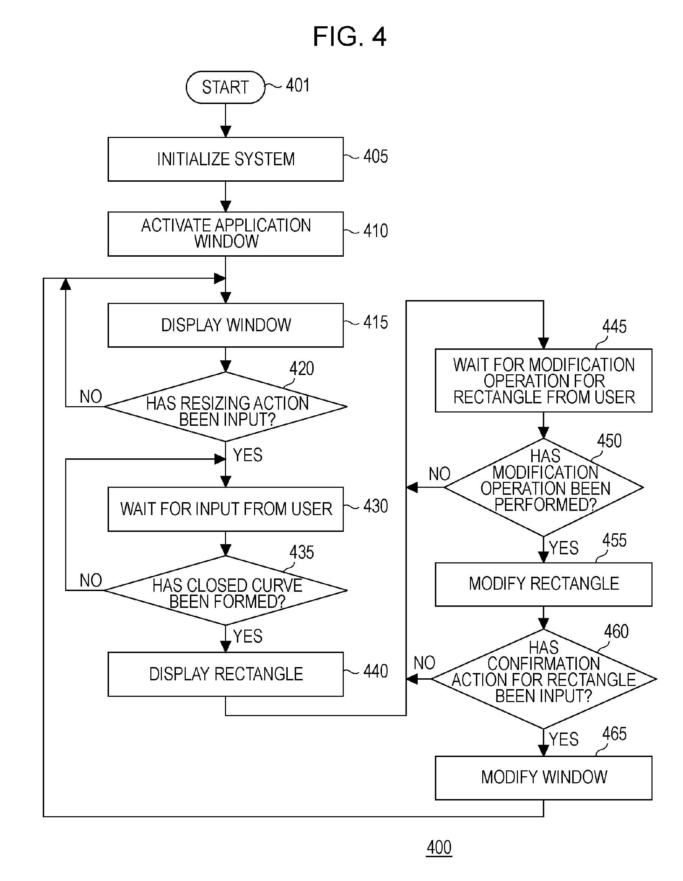

Fig. 4 is a flowchart 400 representing an operation of the data processing system 100 having the multi-window operating system according to the embodiment of the invention. The processing starts at step 401. In step 405, the system is initialized. In step 410, in response to an application activation action from a user (e.g., a double click on an icon representing an application), an application program is activated. In the embodiment of the invention, a web browser is used as an example of the application program.

The processing proceeds to step 415, in which, in response to the activation of the web browser, the window control unit 332 in the operating system 330 generates a window corresponding to the web browser on a desktop screen.

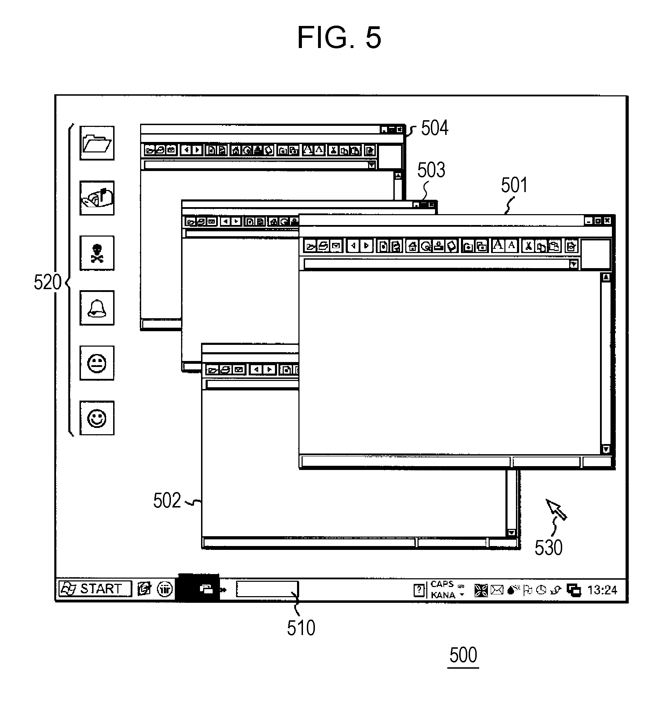

Fig. 5 shows an example of a desktop screen 500 displayed on the display unit 310 implemented by the display device 11 in the data processing system 100 having the multi-window operating system 330 after step 415 ends. On the desktop screen, a plurality of windows 501 to 504, a task bar 510, icons 520, and a pointer 530 are displayed.

Each of the windows 501 to 504 represents a running application as a window. The task bar 510 is a bar for providing functions of the operating system 330. On the task bar 510, a start button, time, an icon of a resident program, and other items are displayed. The icons 520 represents a program, a directory (folder), and a file. In the embodiment of the invention, when a user double-clicks an icon representing an application program with a pointer by using a mouse, the application is activated, and a window corresponding thereto is displayed. The details of such a multi-window operating system are well known to those skilled in the art, so the detailed description is omitted.

A window 501 on the desktop screen 500 is described with reference to Fig. 6. Fig. 6 shows an example of display of the window 501, which is an application window of the web browser. The window 501 includes a menu bar 610, menu icons 620, an address input field 630, a content display area 640, a vertical scroll bar 650, and a horizontal scroll bar 660. The functions of these items are well known to those skilled in the art, so the description is omitted.

In the embodiment of the invention, it should be noted that the window 501 has a window resizing button 670. Positioning the pointer over the window resizing button 670 and clicking the window resizing button 670 shifts to a window resizing mode targeted for the window, and then the graphical input receiving unit 336 prompts a user to input a handwritten figure. The details thereof are described below with reference to the flowchart 400.

Referring back to Fig. 4, the processing proceeds to step 420. In step 420, it is determined whether a window resizing action has been input by a user. Examples of the window resizing action include positioning the window resizing button 670 and clicking it, and the press of a predetermined shortcut key (e.g., SHIFT-R key combination). If input from the window resizing action is not detected, the processing returns to step 415 via the NO arrow from step 420 and continues displaying the window.

In step 420, if the input from the window resizing action is detected, the processing proceeds to step 430, which waits for a graphical input from the user. In this step, the user can operate a mouse and input a handwritten line figure, for example. The user can input the handwritten line figure by using another input device, such as a tablet.

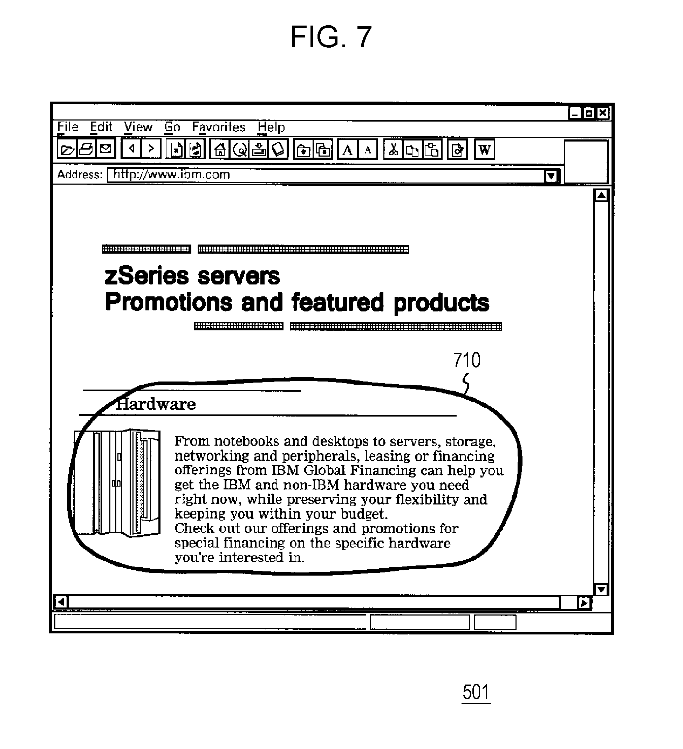

The processing proceeds to step 435, in which it is determined whether a closed curve has been formed in the figure input by the user. Fig. 7 shows an example of a figure 710 in which the closed curve has been formed. If it is determined that the closed curve has not been formed in the figure input by the user, the processing returns to step 430 via the NO arrow from step 435 and continues waiting for a graphical input from the user.

If, in step 435, it is determined that the closed curve has been formed in the figure input by the user, the processing proceeds to step 440 via the YES arrow from step 435, calculates a rectangle that contains the closed curve, and draws it.

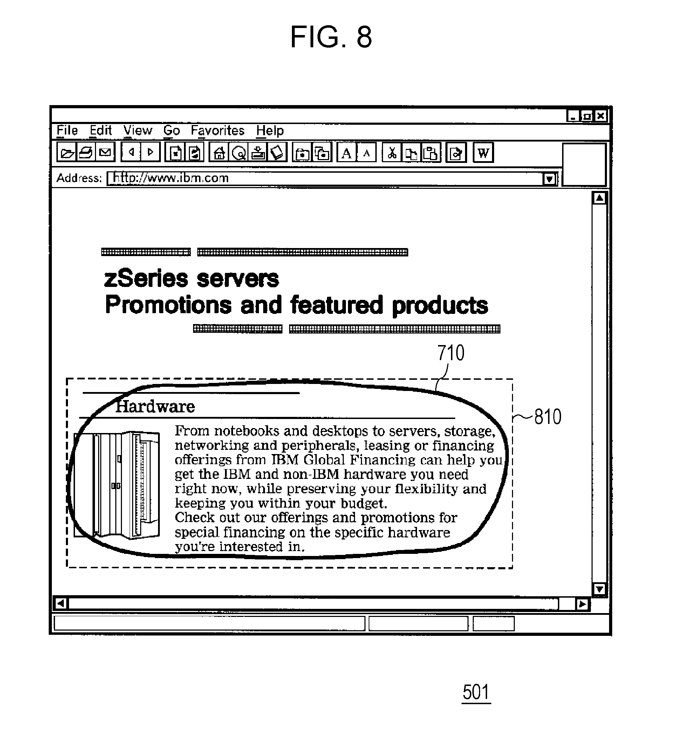

The rectangle that contains the closed curve is calculated in a way described below. The maximum and minimum x and y coordinates (represented by Xmax, Xmin, Ymax, and Ymin) are calculated, a rectangle that has as vertices (Xmin, Ymin), (Xmax, Ymin), (Xmin, Ymax), and (Xmax, Ymax) is calculated, and the rectangle is displayed. Fig. 8 shows a rectangle 810 displayed after being calculated on the basis of the closed curve 710.

In the embodiment of the invention, in step 435, the figure input by the user is entirely contained in the content display area 640. However, the figure input by the user may be a figure that is partially superimposed on the content display area 640 or a figure that is not superimposed on the content display area 640. In this case, a rectangle may be calculated on the basis of only a portion that is superimposed on the content display area 640, and the shape of a window may be resized in a way described below. Alternatively, a rectangle that extends outside the content display area 640 may be calculated on the basis of the entire input figure, and the shape of a window may be resized in a way described below such that a portion of the content that was not displayed outside the content display area 640 is displayed.

The processing proceeds to step 445 and prompts a user to perform a modification operation of modifying the shape of a displayed rectangle. If the calculated and displayed rectangle does not match with a necessary display area that the user intends, the user performs the modification operation for the rectangle by clicking and dragging a side or a vertex of the rectangle or other operation with a mouse. Then, the processing proceeds to step 450 and determines whether the modification operation for the rectangle has been performed.

If, in step 450, it is determined that the modification operation has not been performed, the processing returns to step 445 via the NO arrow from step 450 and continues waiting for input of the modification operation for the rectangle from the user.

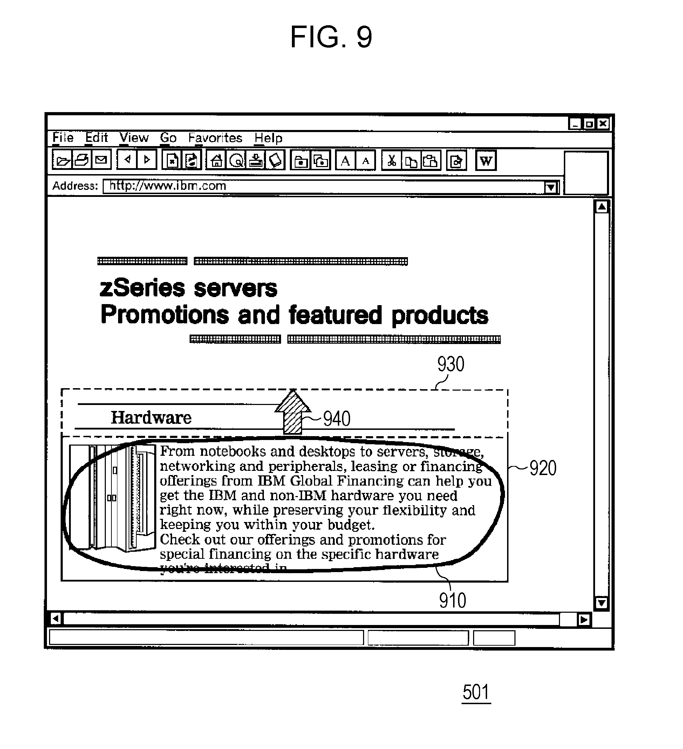

If, in step 450, it is determined that the modification operation has been performed, the processing proceeds to step 455 via the YES arrow from step 450. In step 455, the shape of the displayed rectangle is modified on the basis of input of the modification operation for the rectangle, and the modified rectangle is displayed. Fig. 9 shows an example of a rectangle 930, which is generated by being modified by upward extension (940) of a temporary rectangle 920 generated on the basis of a closed curve 910.

The processing further proceeds to step 460, which determines whether a confirmation action or a cancellation action has been input. One example of the confirmation action is to click the inside of the rectangle. One example of the cancellation action is to click the outside of the rectangle. If, in step 460, it is determined that the cancellation action has been input, the processing returns to step 445 via the NO arrow from the step 460 and continues waiting for input of the modification operation from the user.

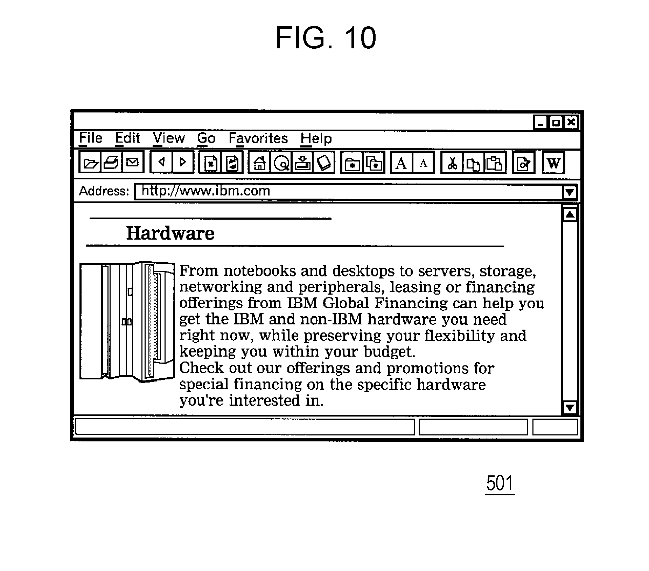

If, in step 460, it is determined that the confirmation action has been input, the processing proceeds to step 465 via the YES arrow from the step 460. In step 465, on the basis of the confirmed rectangle, the shape of the window is actually modified. More specifically, the shape of the window is modified such that the content display area in the window has the shape of the confirmed rectangle. Fig. 10 shows an example of the window that appears after the shape is modified according to the embodiment of the present invention. After the shape of the window is modified, the processing returns to step 415, and the modified window is displayed.

At this time, if the handwritten figure and the rectangle generated on the basis thereof lie within the content display area, the window is reduced. In contrast, if part of the handwritten figure and the rectangle generated on the basis thereof lies outside the content display area, the window may be enlarged.

According to the invention, a window can be resized such that only a portion of a displayed content is displayed on the content display area with a simpler operation. Therefore, it can be readily understood that the productivity of a user operating a multi-window operating system can be increased.

The invention can be implemented in hardware, software, or a combination of both. A typical example of the combination of hardware and software is execution in a data processing system having a predetermined program. In this case, by being loaded into the data processing system and being executed, the program controls the data processing system and causes the processing according to the invention to be executed. The program consists of instructions that can be represented by any language, code, and notation. The instructions enable the system to perform a specific function directly or after either one of (1) conversion into another language, code, and notation and (2) reproduction to another medium or both.

The scope of the invention includes a medium storing a program, in addition to the program itself. The program for performing the functions of the invention can be stored in any computer-readable recording medium, such as an FD, an MO, a CD-ROM, a DVD, an HDD, a ROM, an MRAM, and a RAM. To be stored in the recording medium, the program can be downloaded from other data processing systems connected thereto via a communication line and can be reproduced from another recording medium. The program can be compressed or divided into a plurality of portions and can be stored in a single or a plurality of recording media. Note that a program product implementing the invention can be provided in various forms.

It is obvious to those skilled in the art that various modifications and improvements can be added to the embodiment described above. For example, although the embodiment of the invention has been described on the assumption that the window resizing function would be implemented as one function of the operating system, the implementation of the function at the application level can be made. In addition, although the rectangle contains a closed curve included in a handwritten figure in the embodiment of the invention, the rectangle can contain the entire handwritten figure.

In the embodiment of the invention, after a rectangle is generated on the basis of a handwritten figure, a modification operation of modifying the shape of the rectangle is received from a user, a final confirmation action is received from the user, and then the shape of the a window is changed. However, in response to formation of a closed curve, the shape of the window can be promptly changed without confirmation from the user. In addition, although, in the embodiment of the invention, the shape of a window is changed without change of the position of a generated rectangle, the shape of the window can be changed after the rectangle is moved to the upper left of a content display area prior to changing of the shape of the window.

Although the generation of a rectangle from a handwritten figure has been described in the embodiment of the invention, the content display area can have a shape other than the rectangle. In this case, by appropriately generating a shape that the content display area can take from the handwritten figure, the invention is applicable to other types of display objects. For example, if the content display area is a display object whose content display area can take a circular shape, a circle that contains a closed curve in a handwritten figure can be generated, and, in accordance with this, the display object can be changed.

It is obvious to those skilled in the art that the above-described various modifications or improvements can be added. It is to be noted that implementations to which such modifications or improvements are added can be included in the technical scope of the invention.

### Brief Description of the Drawings

[Fig. 1] Fig. 1 illustrates an example of an external view of a data processing system according to an embodiment of the present invention.
[Fig. 2] Fig. 2 illustrates an example of a hardware configuration in an information processing apparatus suited for implementing the data processing system according to the embodiment of the invention.
[Fig. 3] Fig. 3 is a functional block diagram of the data processing system according to the embodiment of the invention.
[Fig. 4] Fig. 4 is a flowchart representing an operation of the data processing system according to the embodiment of the invention.
[Fig. 5] Fig. 5 shows a desktop screen in the data processing system having a multi-window operating system according to the embodiment of the invention.
[Fig. 6] Fig. 6 shows a scene of a window operated in the data processing system according to the embodiment of the invention.
[Fig. 7] Fig. 7 shows another scene of the window operated in the data processing system according to the embodiment of the invention.
[Fig. 8] Fig. 8 shows another scene of the window operated in the data processing system according to the embodiment of the invention.
[Fig. 9] Fig. 9 shows another scene of the window operated in the data processing system according to the embodiment of the invention.
[Fig. 10] Fig. 10 shows another scene of the window operated in the data processing system according to the embodiment of the invention.

## Claims

1. A method for modifying a shape of a display object containing a content display area on a display device in a data processing system having the display device, the method comprising the steps of:
displaying on the display device the display object containing the content display area;
prompting a user to input a figure to the content display area on the display device;
generating a figure having a shape that the content display area can take on the basis of a shape of the figure input by the user; and
modifying the shape of the display object on the basis of a shape of the generated figure.

2. The method according to claim 1, wherein the input figure is a handwritten figure input by the user via an input device.

3. The method according to claim 2, wherein the generated figure is a rectangle that contains a closed curve included in the handwritten figure.

4. The method according to claim 2, wherein the generated figure is a similar figure of the content display area, the similar figure containing a closed curve included in the handwritten figure.

5. The method according to claim 2, wherein the generated figure is a rectangle that contains the entire handwritten figure.

6. The method according to claim 1, wherein the step of generating the figure having the shape that the content display area can take includes a step of detecting that a closed curve is formed in the figure input by the user and a step of generating the figure having the shape that the content display area can take in response to detection of the formed closed curve.

7. The method according to claim 6, wherein the generated figure is based on the basis of a shape of the closed curve.

8. The method according to claim 1, wherein the step of generating the figure having the shape that the content display area can take includes the steps of:
displaying a temporary figure generated on the basis of the shape of the figure input by the user and prompting the user to perform a modification operation of modifying a shape of the temporary figure; and
modifying the shape of the temporary figure in response to the modification operation performed by the user.

9. The method according to claim 8, wherein the step of generating the figure having the shape that the content display area can take further includes a step of confirming the modified temporary figure as a final shape of the generated figure in response to input of a final confirmation action from the user.

10. The method according to claim 1, wherein the step of modifying the shape of the display object on the basis of a shape of the generated figure includes a step of modifying the shape of the display object such that the display object contains the content display area having the shape of the generated figure.

11. The method according to claim 1, wherein the shape of the display object is modified without change of a position of the generated figure.

12. The method according to claim 1, wherein the generated figure is moved to an upper left of a current position of the content display area.

13. The method according to claim 1, wherein, when the generated figure lies within the content display area, the display object is reduced.

14. The method according to claim 1, wherein, when a portion of the generated figure lies outside the content display area, the display object is enlarged.

15. The method according to claim 1, wherein the display object is a window object in a multi-window operating system.

16. The method according to claim 15, wherein the display object is a window object that supports a web browser.

17. The method according to claim 1, wherein the step of prompting the user to input the figure is performed in response to input of a predetermined user action.

18. The method according to claim 17, wherein the predetermined user action is input of a predetermined shortcut key.

19. The method according to claim 17, wherein the predetermined user action is selection of a selectable object displayed in association with the display object.

20. A program product for modifying a shape of a display object containing a content display area on a display device in a data processing system having the display device, the program product causing the data processing system to execute the steps of:
displaying on the display device the display object containing the content display area;
prompting a user to input a figure to the content display area on the display device;
generating a figure having a shape that the content display area can take on the basis of a shape of the figure input by the user; and
modifying the shape of the display object on the basis of a shape of the generated figure.

21. A data processing system comprising:
a display device;
a processor; and
a memory that stores a program for modifying a shape of a display object containing a content display area on the display device,
wherein execution of the program by the processor causes performance of the steps of:
displaying on the display device the display object containing the content display area;
prompting a user to input a figure to the content display area on the display device;
generating a figure having a shape that the content display area can take on the basis of a shape of the figure input by the user; and
modifying the shape of the display object on the basis of a shape of the generated figure.

22. A data processing system comprising a display device, the data processing system modifying a shape of a display object containing a content display area on the display device, the data processing system further comprising:
a display unit for displaying on the display device the display object containing a content display area;
a prompting unit for prompting a user to input a figure to the content display area on the display device;
a generation unit for generating a figure having a shape that the content display area can take on the basis of a shape of the figure input by the user; and
a modification unit for modifying the shape of the display object on the basis of a shape of the generated figure.
